# EUROPÄISCHE PATENTANMELDUNG

(11) **EP 2 009 890 A1**
(43) Veröffentlichungstag der Anmeldung: **31.12.2008**
(21) Anmeldenummer: 07015234.3
(22) Anmeldetag: 03.08.2007
(51) Int. Cl.: H04M 3/487

(54) **Bereitstellung von Werbung an Telefonbenutzer**

(30) Priorität: 27.06.2007 EP 07012557; 13.07.2007 EP 07013808
(71) Anmelder: Bonmann, Birte, 45133 Essen (DE)
(72) Erfinder: Bonmann, Birte, 45133 Essen (DE)
(74) Vertreter: Gesthuysen, von Rohr & Eggert

(57) **Zusammenfassung**

Es werden ein Verfahren zum Telefonieren, eine Ansageeinrichtung und ein Telefonnetz vorgeschlagen, wobei zur Optimierung der Informationsübertragung anstelle eines Freizeichens eine Sprachinformation an den Anrufer während des Anklingelns beim angewählten Endanschluß übertragen wird.

## Beschreibung

Die Erfindung betrifft ein Verfahren zum Herstellen einer Telefonverbindung, eine Ansageeinrichtung für eine Vermittlungsstelle eines öffentlichen Telefonnetzes sowie ein Telefonnetz gemäß dem Oberbegriff des Anspruchs 19.

Die vorliegende Erfindung bezieht sich auf öffentliche Telefonnetze. Bei einem öffentlichen Telefonnetz im Sinne der vorliegenden Erfindung können Teilnehmer beliebiger Telefonnetze durch ihre Telefonnummer identifizierbare Endanschlüsse im öffentlichen - also von außen zugänglichem - Telefonnetz anwählen. Wenn eine Verbindung zustande kommt, der angewählte Endanschluß also abgenommen wird, fallen üblicherweise Gesprächs- bzw. Verbindungsgebühren an.

In der Praxis ertönt, sofern der Endanschluß nicht besetzt ist, ein Freizeichen, bis der angewählte Endanschluß abgenommen wird. Teilweise werden bei speziellen Netzen zunächst Tatifinformationen angesagt, bevor zum Endanschluß durchgestellt wird und bei nicht besetztem Endanschluß beim angewählten Endanschluß angeklingelt (ein Rufton erzeugt) wird und ein Freizeichen bis zum Abnehmen des Endanschlusses ertönt. Dies ertönt jedoch, bevor angeklingelt wird, also ohne gleichzeitige Erzeugung eines Rufsignals beim angewählten Endanschluß.

Der vorliegenden Erfindung liegt die Aufgabe zugrunde, ein Verfahren zum Herstellen einer Telefonverbindung, einer Ansageeinrichtung für eine Vermittlungsstelle eines öffentlichen Telefonnetzes sowie ein Telefonnetz anzugeben, wobei eine Optimierung der Übertragung von Informationen ermöglicht wird.

Die obige Aufgabe wird durch ein Verfahren gemäß Anspruch 1, eine Ansageeinrichtung gemäß Anspruch 17 oder ein Telefonnetz gemäß Anspruch 19 gelöst. Vorteilhafte Weiterbildungen sind Gegenstand der Unteransprüche.

Eine grundlegende Idee der vorliegenden Erfindung liegt darin, daß beim Anrufen eines Endanschlusses bei noch nicht abgenommenem Endanschluß anstelle eines Freizeichens und/oder in Übertragung des Freizeichens und/oder während des Telefongesprächs eine Sprachinformation übertragen wird. Dies gestattet eine Optimierung der Informationsübertragung. Bisher wird nämlich während des Anklingelns (Erzeugen eines Ruftons) beim angewählten Endanschluß gleichzeitig ein Freizeichen an den Anrufer übermittelt, der darauf wartet, daß der angewählte Endanschluß abgenommen wird. Diese Wartezeit wird erfindungsgemäß - zumindest teilweise - für die Übertragung der Sprachinformation, also einer zusätzlichen Information, genutzt.

Bei der Sprachinformation kann es sich beispielsweise um Nachrichten, Werbung o. dgl. handeln.

Erfindungsgemäß handelt es sich bei der Sprachinformation insbesondere um eine gesprochene Information. Vorzugsweise umfaßt der Begriff "Sprachinformation" jedoch auch eine gesungene oder sonstige durch akustische, hörbare Signale, insbesondere Sprachsignale, übertragbare oder phonetische Information, deren Informationsgehalt über den eines Freizeichens hinausgeht.

Vorzugsweise wird die Sprachinformation so lange übertragen, bis der angerufene Endanschluß abgenommen wird. Dieses Abnehmen kann beispielsweise durch Abheben eines Telefonhörers oder durch Abnehmen der Leitung durch einen Anrufbeantworter o. dgl. erfolgen. Insbesondere ersetzt die Sprachinformation also das Freizeichen.

Bei besetztem Endanschluß wird die Sprachinformation nicht übertragen, sondern nur das übliche Besetztzeichen.

Es ist üblich, daß nach einer verhältnismäßig langen Zeitdauer, nämlich nach einer maximalen Anklingelzeit, der Verbindungsaufbau zu dem angewählten Endanschluß unterbrochen, also das Anklingeln gestoppt wird. Anstelle des bisher übertragenen Freizeichens wird dann ein Besetztzeichen an den Anrufer übertragen. Diese Funktion bleibt vorzugsweise erhalten. Wenn bei der vorliegenden Erfindung der angewählte Endanschluß nicht abgenommen und die maximale Anklingelzeit erreicht wird, wird die Übertragung der Sprachinformation ebenfalls beendet und statt dessen ein Besetztzeichen übertragen.

Alternativ oder zusätzlich kann es vorgesehen sein, daß die Sprachinfonnation nur höchstens für eine vorbestimmte Zeitdauer, die kürzer als die maximale Anklingelzeit ist, übertragen wird. Diese vorbestimmte Zeitdauer kann beispielsweise durch die maximale Dauer der übertragenen Sprachinfomation festgelegt sein. Nach Beendigung der Übertragung der Sprachinformation wird dann weiter ein Freizeichen übertragen, sofern der Endanschluß nicht zwischenzeitlich abgenommen worden ist. Es ist anzumerken, daß auch bei einer nur zeitlich begrenzten Übertragung der Sprachinformation die ansonsten erfolgende Übertragung des Freizeichens während des gesamten Anklingelns des angewählten Endanschlusses zumindest teilweise zur Übertragung der Sprachinformation genutzt wird, also auch in diesem Fall eine optimierte Informationsübertragung ermöglicht wird, ohne daß ein Anrufer länger auf die Herstellung der gewünschten Telefonverbindung warten muß.

Alternativ oder zusätzlich können die Sprachinformationen nur für eine vorbestimmte Zeitdauer und danach Freizeichen übertragen werden, sofern der angerufene Endanschluß nicht vorher abgenommen wird.

Alternativ oder zusätzlich kann vor der Sprachinformation zunächst eine vorbestimmte Anzahl von Freizeichen, insbesondere nur ein Freizeichen, übertragen werden.

Alternativ oder zusätzlich kann die Sprachinformation auch während der hergestellten Telefonverbindung bzw. bei abgenommenem Endanschluß - insbesondere nur zu Anfang oder gegebenenfalls auch während des gesamten Telefonats - übertragen werden.

Wenn die Sprachinformation während der hergestellten Telefonverbindung bzw. bei abgenommenem Endanschluß übertragen wird, ist die Lautstärke der Sprachinformation vorzugsweise gegenüber der Lautstärke während des Anklingelns reduziert.

Wenn die Sprachinformation gleichzeitig oder überlagert zu Freizeichen übertragen wird, ist die Lautstärke der Sprachinformation im Verhältnis zur Lautstärke der Freizeichen oder umgekehrt vorzugsweise gesteuert oder geregelt oder auf sinnvolles Niveau festgelegt. Insbesondere kann es hierzu sinnvoll sein, die Sprachinformationen mit den Freizeichen vorab zu speichern.

Die Übermittlung bzw. Ansage der Sprachinformation bleibt vorzugsweise kostenlos, wenn der angerufene Endanschluß nicht abgenommen wird. Wenn der angerufene Endanschluß abgenommen wird, fallen nur die üblichen Verbindungsgebühren oder reduzierte oder - je nach Tarif - gegebenenfalls keine Verbindungsgebühren an.

Weitere Aspekte, Vorteile, Eigenschaften und Merkmale der vorliegenden Erfindung ergeben sich aus den Ansprüchen und der folgenden Beschreibung einer bevorzugten Ausführungsform anhand der Zeichnung. Es zeigen:
- Fig. 1: ein Schema eines vorschlagsgemäßen Telefonnetzes; und
- Fig. 2: einen blockschaltbildartigen bevorzugten Verfahrensablauf.

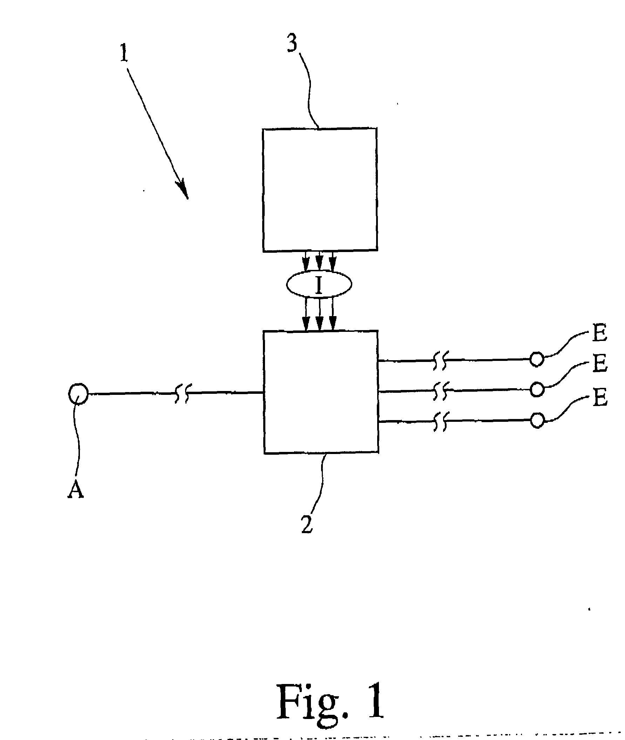

Fig. 1 zeigt schematisch ein vorschlagsgemäßes Telefonnetz 1, Das Telefonnetz 1 weist insbesondere eine zentrale Vermittlungsstelle 2 auf Mehrere Anrufer A (in Fig. 1 ist aus Vereinfachungsgründen nur ein Anrufer A dargestellt) können über ihre jeweilige Telefonnummer identifizierbare Endanschlüsse E anwählen bzw. anrufen.

Es ist anzumerken, daß das Telefonnetz 1 nicht nur eine Vermittlungsstelle 2 sondern verschiedene und/oder dezentrale Vermittlungsstellen 2 aufweisen kann.

Insbesondere kann ein Anrufer A auch aus anderen Telefonnetzen einen Endanschluß E des Telefonnetzes 1 anwählen, beispielsweise von einem Festnetz in ein Mobilfunknetz oder umgekehrt oder von einem Festnetz zu einem anderen Festnetz oder von einem Mobilfunknetz zu einem anderen Mobilfunknetz. Es handelt sich also um ein öffentliches Telefonnetz 1.

Beim Anwählen eines Endanschlusses E wird zunächst automatisch festgestellt, ob der Endanschluß E besetzt ist. Wenn er nicht besetzt ist, wird angeklingelt, also ein Rufton beim Endanschluß E erzeugt, wobei gleichzeitig ein Freizeichen (Tonsignal) an den den Endanschluß E anrufenden Anrufer A üblicherweise übertragen wird.

Erfindungsgemäß wird anstelle des Freizeichens - zumindest für eine vorbestimmte Zeitdauer - eine Sprachinformation I an den Anrufer A übertragen. Die Bereitstellung, Speicherung und/oder Erzeugung der Sprachinformation I erfolgt vorzugsweise über das Telefonnetz 1 bzw. deren Vermittlungsstelle 2, besonders bevorzugt über eine entsprechend ausgebildete Ansageeinrichtung 3, wie in Fig. 1 angedeutet. Die Ansageeinrichtung 3 ist dem Telefonnetz 1 zugeordnet, insbesondere an die Vermittlungsstelle 2 oder eine sonstige Komponente angeschlossen oder darin integriert oder davon gebildet.

Die Vermittlungsstelle 2 erkennt beispielsweise in üblicher Weise, wenn der angerufene Endanschluß E nicht besetzt ist, so daß angeklingelt wird. Die Ansageeinrichtung 3 kann dann beispielsweise zusammen mit einem Freizeichengenerator oder anstatt eines Freizeichengenerators die Sprachinformation I bereitstellen, die anstelle des Freizeichens an den Anrufer A übertragen wird, insbesondere bis der angerufene Endanschluß E abgenommen oder ggf. die vorbestimmte maximale Anklingelzeit erreicht oder überschritten wird. Nach Erreichen oder Überschreiten der maximalen Anklingelzeit wird dann insbesondere der Anwahlvorgang abgebrochen und an den Anrufer A ein Besetztzeichen (Tonsignal) übermittelt.

Gemäß einer Ausführungsvariante kann ein Anrufer A und/oder für einen Endanschluß E vom jeweiligen Inhaber festgelegt werden, ob grundsätzlich eine Sprachinformation 1 beim Anrufen anstelle eines Freizeichens oder nur das bisher übliche Freizeichen übertragen wird. Diese Festlegung kann insbesondere durch eine wählbare Voreinstellung festgelegt oder verändert werden, ggf. auch nur temporär. Die entsprechende Voreinstellung kann auch grundsätzlich im Rahmen des Vertrags mit dem jeweiligen Telefonanbieter bzw. Netzbetreiber und/oder in Abhängigkeit von dem damit verbundenen Gebührentarif festgelegt werden.

Besonders bevorzugt ist bzw. sind das Telefonnetz 1, die Vermittlungsstelle 2 und/oder die Ansageeinrichtung 3 derart ausgebildet, daß verschiedene Sprachinformationen I speicherbar, erzeugbar und/oder übertragbar sind. Die Übertragung der verschiedenen Sprachinformationen I kann insbesondere durch einen Zufallsgenerator (nicht dargestellt) ausgewählt werden bzw. erfolgen. Alternativ oder zusätzlich können die verschiedenen Sprachinformationen I, die jeweils übertragen werden, in Abhängigkeit von der Uhrzeit, vom Tag und/oder von einem sonstigen zeitlichen Parameter ausgewählt werden.

Weiter können die zu übertragenen Sprachinformationen I jeweils nacheinander in einer bestimmten Reihenfolge oder einer beliebigen Reihenfolge übertragen werden, insbesondere wenn derselbe Endanschluß E angerufen wird und/oder wenn derselbe Anrufer A - ggf. auch unterschiedliche Endanschlüsse E - anruft.

Insbesondere ist also die Reihenfolge der Übertragung verschiedener Sprachinformationen I für einen oder jeden Anrufer A und/oder einem oder jedem Endanschluß E festlegbar. Die Reihenfolge kann beispielsweise stündlich oder täglich wiederholt werden, also wieder von vom beginnen bzw. zurückgesetzt, und/oder geändert werden. Entsprechend können auch einzelne oder alle Sprachinformationen geändert werden.

Die Auswahl der jeweils übertragenen Sprachinformation I kann alternativ oder zusätzlich in Abhängigkeit von der wiederholten Anwahl eines Endanschlusses E durch den gleichen oder unterschiedliche Anrufer A, von der Anzahl der Anwahl von Endanschlüssen E - insbesondere innerhalb eines bestimmten Zeitfensters - durch denselben Anrufer A, von der Anzahl der insgesamt erfolgten und/oder vollständigen Übertragungen der Sprachinformation(en) I und/oder von der Anzahl und/oder Länge der erfolgten Übertragungen einer einzelnen oder jeden einzelnen Sprachinformation I erfolgen.

Beispielsweise ist es möglich, daß verschiedene Sprachinformationen I in Abhängigkeit von verschiedenen Tageszeiten übertragen werden. Diese verschiedenen Sprachinformationen I können beispielsweise von unterschiedlichen Anbietern stammen bzw. bereitgestellt werden.

Alternativ oder zusätzlich können verschiedene Sprachinformationen I auch in Abhängigkeit von dem jeweiligen Anrufer A und/oder in Abhängigkeit von dem jeweils angerufenen Endanschluß E, insbesondere dessen Vorwahl, besonders bevorzugt dessen Landesvorwahl, übertragen werden. Dies gestattet insbesondere eine Anpassung der Sprache der Sprachinformationen I und/oder eine regional abhängige Auswahl oder Bereitstellung oder Übertragung von verschiedenen Sprachinformationen I.

Alternativ oder zusätzlich können verschiedene Sprachinformationen I auch in Abhängigkeit von dem Geschlecht, dem Alter, dem gewählten Gebührentarif, einer gewählten Sprache, einem gewählten Interessensgebiet, der Ausbildung und/oder dem Beruf des Anrufers A oder des Inhabers des angerufenen Endanschlusses E übertragen werden. Beispielsweise ist es möglich, vorab oder jeweils beim Anrufen eine bestimmte Gruppe von Sprachinformationen I zu wählen, die übertragen wird. Insbesondere können die Sprachinformationen I in verschiedene Gruppen eingeteilt werden, die in Abhängigkeit von den vorgenannten Kriterien, wie Alter, Geschlecht oder dergleichen, übertragen werden. Besonders bevorzugt werden die Sprachinformationen I bereits vorab in verschiedenen Gruppen gespeichert, zusammengefaßt oder bereitgehalten, beispielsweise auf einem dem Telefonnetz 1 zugeordneten Server.

Wie bereits erwähnt, können die Sprachinformationen I auch aufgrund sonstiger Kriterien ausgewählt, erzeugt, angepaßt und/oder übertragen werden.

Zur Auswahl einer Sprachinformation I zur Übertragung aus verschiedenen Sprachinformationen I ist insbesondere eine zentrale oder dezentrale Steuereinheit, wie ein Zentralcomputer oder dergleichen, vorgesehen, die anhand eines Kriteriums, wie Alter oder Geschlecht, oder mehrerer Kriterien die jeweilige Sprachinformation I aus einer Vielzahl von Sprachinformationen I oder aus einer Untergruppe von Sprachinformationen I auswählt oder bestimmt und zur Übertragung bereitstellt. Die Steuereinheit ist dem Telefonnetz zugeordnet.

Gemäß einer Ausführungsvariante ist auch möglich, eine Sprachinformation I erst vollständig zu übertragen und, falls währenddessen der angerufene Endanschluß E abgehoben wird, an den angerufenen Endanschluß E bis zum Ende der Sprachinformation I noch ein Wartesignal oder dergleichen zu übertragen.

Das Telefonnetz 1, die Vermittlungsstelle 2 und/oder die Ansageeinrichtung 2 ist bzw. sind vorzugsweise derart ausgebildet, daß erfaßbar, speicherbar, anzeigbar und/oder ausgebbar ist, wie oft, wann und/oder wie lange die einzelnen Sprachinformationen I übertragen worden sind. Diese Übertragungsinfonnationen sind insbesondere für die Anbieter der Sprachinformation I relevant und/oder können zu Abrechnungszwecken beispielsweise für Anbieter der Sprachinformationen I verwendet werden.

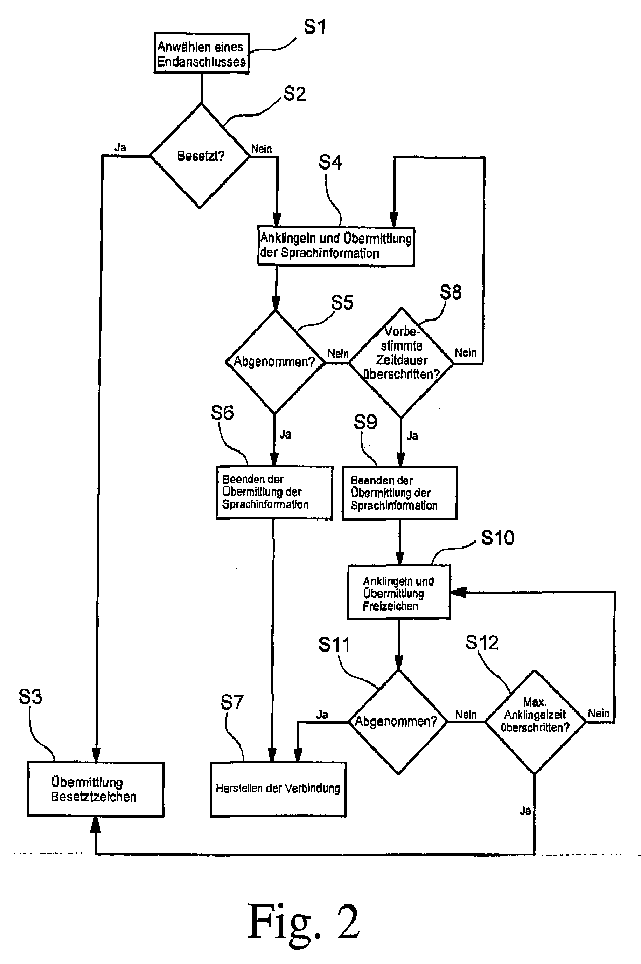

Fig. 2 zeigt in einer schematischen, blockschaltbildartigen Darstellung einen bevorzugten Verfahrensablauf.

In Schritt S1 erfolgt zunächst ein Anwählen eines Endanschlusses E durch einen Anrufer A.

In Schritt S2 wird automatisch überprüft, ob der angewählte Endanschluß E besetzt ist.

Ist dies der Fall, wird in Schritt S3 ein Besetztzeichen übermittelt. Damit endet die Herstellung der gewünschten Telefonverbindung zum Endanschluß E. Der Anrufer A muß also ggf. später noch einmal anrufen oder kann ggf. einen automatischen Rückruf aktivieren, eine SMS schicken oder eine sonstige Option wählen, sofern verfügbar.

Ist im Schritt S2 festgestellt worden, daß der angewählte Endanschluß E nicht besetzt ist, folgt in Schritt S4 ein Anklingeln (Erzeugen eines Ruftons) beim angewählten Endanschluß E. Gleichzeitig bzw. parallel wird die Spxachinformation I an den Anrufer A übermittelt. Gemäß einer nicht dargestellten Ausführungsalternative ist es auch möglich, zunächst ein erstes Freizeichen an den Anrufer A zu übermitteln und dann erst mit der Übermittlung der Sprachinformation I zu beginnen.

Es ist anzumerken, daß die Übermittlung der Sprachinformation I erfindungsgemäß gleichzeitig zum Anklingeln erfolgt, also durch die Übertragung der Sprachinformation I vorzugsweise keine zusätzliche Wartezeit, bis die Telefonverbindung mit dem angewählten Endanschluß E hergestellt wird, für den Anrufer A verursacht wird.

Anschließend wird in einer ersten Schleife bzw. in Schritt S5 der ersten Schleife fortlaufend bzw. wiederholend überprüft, ob der angewählte Endanschluß E abgenommen worden ist. Falls nein, wird das Anklingeln beim angewählten Endanschluß E und das Übermitteln der Sprachinformation I an den Anrufer A fortgesetzt. Falls ja, wird die Übermittlung der Sprachinformation I in Schritt S6 beendet und die Telefonverbindung zwischen dem Anrufer A und dem angewählten, jetzt abgenommenen Endanschluß E in Schritt S7 hergestellt.

Bei der ersten Schleife kann optional in einem nur vorzugsweise vorgesehenen Schritt S8 überprüft werden, ob eine vorbestimmte Zeitdauer bereits erreicht oder überschritten wurde. Falls nein, wird mit dem Anklingeln und Übermitteln der Sprachinformation I gemäß Schritt S4 fortgesetzt. Falls ja, wird in Schritt S9 die Übermittlung der Sprachinformation I beendet.

Weiter wird dann nach Schritt S9 das Anklingeln beim angewählten Endanschluß E fortgesetzt und nunmehr anstelle der Sprachinformation I ein Freizeichen übermittelt. Dies erfolgt in Schritt S10.

Weiter wird dann in einer zweiten Schleife bzw. in Schritt S11 der zweiten Schleife wiederholend oder fortlaufend überprüft, ob der Endanschluß E abgenommen worden ist.

Falls ja, wird die Verbindung gemäß Schritt S7 hergestellt. Falls nein, wird das Anklingeln und Übermitteln des Freizeichens gemäß Schritt S10 fortgesetzt.

Optional wird bei der zweiten Schleife in einem bevorzugten Schritt S 12 überprüft, ob eine vorbestimmte maximale Anklingelzeit erreicht oder überschritten worden ist. Falls ja, wird der Verbindungsaufbau zu dem Endanschluß E beendet und gemäß Schritt S3 ein Besetztzeichen an den Anrufer A übermittelt. Falls nein, wird das Anklingeln und Übermitteln des Freizeichens gemäß Schritt S 10 fortgesetzt.

Wenn der optionale Überprüfungsschritt S8 bei der ersten Schleife nicht erfolgt und damit auch die zweite Schleife entfällt, kann statt des Schrittes S8 optional die Überprüfung gemäß Schritt S 12 bei der ersten Schleife erfolgen, Schritt S 12 also Schritt S 8 ersetzen.

Es ist anzumerken, daß der vorgenannte Verfahrensablauf lediglich schematisch wesentliche Schritte des vorschlagsgemäßen Verfahrens und des vorschlagsgemäßen Telefonnetzes 1 darstellt. Sonstige Funktionen oder fortlaufende Überprüfungen wurden aus Vereinfachungsgründen weggelassen.

Gemäß einer weiteren Ausführungsvariante kann die Sprachinformation I alternativ oder zusätzlich auch während der hergestellten Telefonverbindung bzw. bei abgenommenem Endanschluß E übertragen werden.

Gemäß einer Ausführungsvariante wird die Sprachinformation nur für eine vorbestimmte Zeitdauer oder Mindestzeit übertragen, insbesondere unabhängig davon, ob der angerufene Endanschluß E abgenommen worden ist. Wenn der Endanschluß E vor Beendigung der Übertragung der Sprachinformation abgenommen wird, wird die Übertragung der Sprachinformation I dann vorzugsweise auch noch während der hergestellten Telefonverbindung fortgesetzt. Besonders bevorzugt ist die Lautstärke der übertragenen Sprachinformation I dann gegenüber der Lautstärke während des Anklingelns reduziert. Weiter ist die Sprachinformation I dann auch gleichzeitig vom angerufenen Endanschluß E aus hörbar, wobei dies jedoch nur optional ist.

Gemäß einer weiteren Ausführungsvariante ist zusätzlich oder alternativ vorgesehen, daß eine vorbestimmte Anzahl von Freizeichen, insbesondere nur ein Freizeichen, während des Anklingelns vor der Sprachinformation I übertragen wird. Dies zeigt dem Anrufer A an, daß beim angerufenen Endanschluß E angeklingelt wird.

Alternativ oder zusätzlich werden vorzugsweise während des Anklingelns die Sprachinformation I nur für eine vorbestimmte Zeitdauer und danach Freizeichen übertragen, sofern der angerufene Endanschluß E nicht vorher abgenommen wird.

Gemäß einer weiteren Ausführungsvariante können die Sprachinformation I und die Freizeichen simultan übertragen bzw. überlagert werden. Dies erleichtert jedem Anrufer A die Erkennung, daß angeklingelt wird.

Bei der vorgenannten simultanen Übertragung bzw. Überlagerung wird vorzugsweise die Lautstärke der Sprachinformation I im Verhältnis zur Lautstärke der Freizeichen oder umgekehrt gesteuert oder geregelt oder auf sonstige Weise auf ein vorzugsweise ideales Verhältnis festgelegt, beispielsweise dadurch, daß die mit Freizeichen überlagerte Sprachinformation vorab gespeichert ist und dadurch optimal angepaßt sein kann.

Die vorschlagsgemäße Erfindung ist insbesondere für den Einsatz bei Mobilfunknetzen geeignet.

Einzelne Aspekte und Merkmale der erläuterten Verfahren sowie Verfahrens- und Ausführungsvarianten können auch beliebig miteinander kombiniert oder bei sonstigen Verfahren zum Herstellen einer Telefonverbindung eingesetzt werden und/oder bei der vorschlagsgemäßen Ansageeinrichtung 3 bzw. dem vorschlagsgemäßen Telefonnetz 1 realisiert oder implementiert werden.

Es werden ein Verfahren zum Telefonieren, eine Ansageeinrichtung und ein Telefonnetz vorgeschlagen, wobei zur Optimierung der Informationsübertragung anstelle eines Freizeichens eine Sprachinformation an den Anrufer insbesondere während des Anklingelns beim angewählten Endanschluß übertragen wird.

Die vorliegende Erfindung gestattet eine optimale bzw. verbesserte Information zur Übertragung. Insbesondere wird die Wartezeit bis zum Herstellen einer Telefonverbindung während des Anklingelns zumindest teilweise zur Übertragung einer Sprachinformation I genutzt.

## Patentansprüche

1. Verfahren zum Herstellen einer Telefonverbindung, wobei beim Anrufen eines Endanschlusses (E) bei noch nicht abgenommenem Endanschluß (E) anstelle eines Freizeichens und/oder während des Anklingelns und/oder während der hergestellten Telefonverbindung bzw, bei abgenommenem Endanschluß (E) eine Sprachinformation (I) übertragen wird.

2. Verfahren nach Anspruch 1, **dadurch gekennzeichnet, daß** vor der Sprachinformation (I) eine vorbestimmte Anzahl von Freizeichen, insbesondere nur ein Freizeichen, übertragen wird.

3. Verfahren nach Anspruch 1 oder 2, **dadurch gekennzeichnet, daß** die Sprachinformation (I) nur für eine vorbestimmte Zeitdauer und danach Freizeichen übertragen werden, sofern der angerufene Endanschluß (E) nicht vorher abgenommen wird.

4. Verfahren nach einem der voranstehenden Ansprüche, **dadurch gekennzeichnet, daß** die Sprachinformation (I) simultan mit Freizeichen übertragen wird oder Freizeichen der Sprachinformation (I) überlagert werden.

5. Verfahren nach Anspruch 4, **dadurch gekennzeichnet, daß** die mit Freizeichen überlagerte Sprachinformation (I) gespeichert ist.

6. Verfahren nach einem der voranstehenden Ansprüche, **dadurch gekennzeichnet, daß** die Lautstärke der Sprachinformation (I) im Verhältnis zur Lautstärke der Freizeichen oder umgekehrt gesteuert oder geregelt wird.

7. Verfahren nach einem der voranstehenden Ansprüche, **dadurch gekennzeichnet, daß** die Sprachinformation (I) für eine vorbestimmte Zeitdauer oder Mindestzeit übertragen wird, unabhängig davon ob der angerufene Endanschluß (E) abgenommen worden ist.

8. Verfahren nach einem der voranstehenden Ansprüche, **dadurch gekennzeichnet, daß** die Lautstärke der Sprachinformation (I) bei der Übertragung während der hergestellten Telefonverbindung bzw. bei abgenommenem Endanschluß (E) reduziert ist gegenüber der Lautstärke der Sprachinformation (I) während des Anklingelns.

9. Verfahren nach einem der voranstehenden Ansprüche, **dadurch gekennzeichnet, daß** die Sprachinformation (I) nur an den anrufenden Endanschluß (E) übertragen wird.

10. Verfahren nach einem der voranstehenden Ansprüche, **dadurch gekennzeichnet, daß** für einen oder jeden Endanschluß (E) - optional temporär - festlegbar ist, ob die Sprachinformation (I) beim Anrufen vom jeweiligen Endanschluß (E) aus und/oder des jeweiligen Endanschlusses (E) übertragen wird.

11. Verfahren nach einem der voranstehenden Ansprüche, **dadurch gekennzeichnet, daß** verschiedene Sprachinformationen (I), insbesondere per Zufallsgenerator, und/oder in Abhängigkeit von der Uhrzeit, vom Tag, von einem sonstigen zeitlichen Parameter übertragen werden.

12. Verfahren nach einem der voranstehenden Ansprüche, **dadurch gekennzeichnet, daß** verschiedene Sprachinformationen (I) in Abhängigkeit von dem jeweils angerufenen Endanschluß (E), insbesondere dessen Vorwahl, übertragen werden.

13. Verfahren nach einem der voranstehenden Ansprüche, **dadurch gekennzeichnet, daß** verschiedene Sprachinformationen (I) in Abhängigkeit von dem jeweiligen Anrufer (A), insbesondere dessen Vorwahl, übertragen werden.

14. Verfahren nach einem der voranstehenden Ansprüche, **dadurch gekennzeichnet, daß** verschiedene Sprachinformationen (I) in Abhängigkeit von der wiederholten Anwahl eines angerufenen Endanschlusses (E) durch den gleichen oder unterschiedliche Anrufer (A) übertragen werden.

15. Verfahren nach einem der voranstehenden Ansprüche, **dadurch gekennzeichnet, daß** verschiedene Sprachinformationen (I) in Abhängigkeit von der Anzahl der Anwahlen von Endanschlüssen (E) - insbesondere innerhalb eines bestimmten Zeitfensters - durch denselben Anrufer (A) an diesen Anrufer (A) übertragen werden.

16. Verfahren nach einem der voranstehenden Ansprüche, **dadurch gekennzeichnet, daß** verschiedene Sprachinformationen (I) in Abhängigkeit von der Anzahl der insgesamt erfolgten Übertragungen und/oder von der Anzahl und/oder Länge der erfolgten Übertragungen einer einzelnen oder jeder einzelnen Sprachinformation (I) übertragen werden.

17. Ansageeinrichtung (3) für ein öffentliches Telefonnetz (1), wobei die Ansageeinrichtung (3) derart ausgebildet ist, daß beim Anrufen eines Endanschlusses (E) bei noch nicht abgenommenem Endanschluß (E) anstelle eines Freizeichens oder zusätzlich zu Freizeichen und/oder während der hergestellten Telefonverbindung bzw. bei abgenommenem Endanschluß (E) eine gespeicherte und/oder von der Ansageeinrichtung (3) erzeugte Sprachinformation (I) übertragbar ist.

18. Ansageeinrichtung nach Anspruch 17, **dadurch gekennzeichnet, daß** die Sprachinformation (I) gemäß einem Verfahren nach einem der Ansprüche 1 bis 16 übertragbar ist.

19. Telefonnetz (1) mit einer Ansageeinrichtung (3), zur Herstellung von Telefonverbindungen zu verschiedenen durch die jeweilige Telefonnummer identifizierbaren Endanschlüssen (E) über eine automatisch arbeitende Vermittlungsstelle (2),
**dadurch gekennzeichnet,**
**daß** beim Anrufen eines Endanschlusses (E) bei noch nicht abgenommenem Endanschluß (E) anstelle eines Freizeichens oder zusätzlich zu dem Freizeichen und/oder während der hergestellten Telefonverbindung bzw. bei abgenommenem Endanschluß (E) eine Sprachinformation (I) als hörbares akustisches Signal übertragbar oder ansagbar ist.

20. Telefonnetz nach Anspruch 19, **dadurch gekennzeichnet, daß** die Sprachinformation (I) gemäß einem Verfahren nach einem der Ansprüche 1 bis 19 übertragbar ist.
